(19) Europäisches Patentamt
European Patent Office
Office européen des brevets

(11) EP 1 688 039 A2

(12) **EUROPEAN PATENT APPLICATION**

(43) Date of publication:
**09.08.2006 Bulletin 2006/32**

(51) Int Cl.:
***A01N 37/22*** *(2006.01)*

(21) Application number: **06002082.3**

(22) Date of filing: **01.02.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **08.02.2005 JP 2005031653**

(71) Applicant: **NIHON NOHYAKU CO., LTD.**
**Chuo-ku**
**Tokyo (JP)**

(72) Inventors:
- **Kodoma, Hiroshi, c/o Nihon Nohyaku Co., Ltd. Kawachinagano-shi Osaka (JP)**
- **Nishimatsu, Tetsuyoshi, Nihon Nohyaku Co., Ltd. Kawachinagano-shi Osaka (JP)**

(74) Representative: **Grünecker, Kinkeldey, Stockmair & Schwanhäusser Anwaltssozietät Maximilianstrasse 58 80538 München (DE)**

(54) **Agricultural and horticultural poison bait preparation**

(57) The present invention provides an agricultural and horticultural poison bait preparation obtained by incorporating a phthalamide derivative represented by general formula (I):

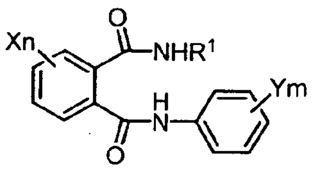

( I )

(wherein $R^1$ is a $(C_1\text{-}C_6)$alkyl group, a $(C_1\text{-}C_6)$alkylthio$(C_1\text{-}C_6)$alkyl group, a $(C_1\text{-}C_6)$alkylsulfinyl$(C_1\text{-}C_6)$alkyl group or a $(C_1\text{-}C_6)$alkylsulfonyl$(C_1\text{-}C_6)$alkyl group; each of Xs, which may be the same or different, is a halogen atom; n is 1 or 2; each of Ys, which may be the same or different, is a halogen atom, a $(C_1\text{-}C_6)$ alkyl group, a halo$(C_1\text{-}C_6)$alkyl group or a halo$(C_1\text{-}C_6)$alkoxy group; and m is 2 or 3) as an active ingredient into an edible carrier (e.g. rice bran) attractive to insect pests. The agricultural and horticultural poison bait preparation of the present invention exhibits an excellent controlling effect on various insect pests.

EP 1 688 039 A2

## Description

TECHNICAL FIELD

The present invention relates to a poison bait preparation comprising a phthalamide derivative as an active ingredient and its usage.

BACKGROUND ART

As poison bait preparations, those obtained by incorporating an organophosphorus insecticide, a carbamate insecticide or a pyrethroid insecticide as an active ingredient into a carrier (e.g. rice bran) as an attractive ingredient have been used for controlling cutworms, common cutworm, crickets and the like.

The phthalamide derivative used in the present invention is a well-known compound having insecticidal activity (e.g. JP-A-11-240857 and JP-A-2001-131141) and is known to exhibit synergistic insecticidal activity when used in admixture with other insecticides (e.g. JP-A-2003-12415). It is disclosed in references that the phthalamide derivative can be used after being prepared into a suitable preparation form, depending on purpose of use and that the derivative can be used as a bait preparation (a poison bait preparation) for controlling stored grain insect pests, house insect pests, sanitary insect pests, forest insect pests and the like (e.g. JP-A-11-240857 and JP-A-2001-131141). These references, however, do not disclose specific production process and application method of a poison bait preparation using the phthalamide derivative, and they neither disclose nor suggest, in particular, the employment of the phthalamide derivative as an agricultural and horticultural poison bait preparation for controlling insect pests in the fields of agriculture and horticulture.

In the above-mentioned prior arts, the organophosphorus pesticide and the carbamate pesticide involve, for example, the following problems: they have an insufficient stability and a low effect lastingness as an active ingredient; they are not sufficiently taken by insect pests to be controlled because the insect pests avoid a poison bait preparation using them, owing to the peculiar odor of the poison bait preparation; their effect is not always sufficient because insect pests resistant to them have appeared; and they are highly toxic to other animals such as mammals and birds and hence are liable to cause an accident due to taking by these animals by mistake. The pyrethroid pesticide involves, for example, the following problems: it is not sufficiently taken as a poison bait preparation because of its repellence; its effect is not always sufficient because insect pests resistant to it have appeared; and it has a high toxicity (in particular, fish-toxicity) to living things other than the insect pests to be controlled.

Therefore, there has been a desire for a safe and highly effective poison bait preparation, for example, an agricultural and horticultural poison bait preparation which is such that for the protection of field and garden crops against, for example, insect pests living in soil and the like, the poison bait preparation has no repellence to the insect pests and the like, retains a high effect at a low dosage, is highly effective also against insect pests having a high resistance to existing chemicals, and has a low toxicity to living things other than the insect pest to be controlled, such as mammals, birds, fishes and the like.

DISCLOSURE OF THE INVENTION

The present inventors incorporated a phthalamide derivative as an active ingredient into a carrier attractive to insect pests in order to solve the above problems, and consequently found that the preparation thus obtained had excellent attractive and appetizing properties (no repellence) for various insect pests including insect pests resistant to existing chemicals and a high fatal efficacy and moreover, exhibits a high controlling effect on the insect pests even at a much lower applying dosage per unit application area as compared with, for example, application of a conventional pesticidal formulation, whereby the present invention has been accomplished.

That is, the present invention relates to a poison bait preparation obtained by incorporating a phthalamide derivative represented by general formula (I) :

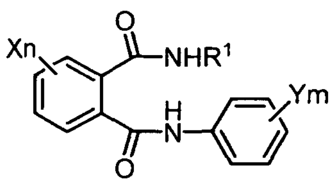

( I )

(wherein $R^1$ is a $(C_1\text{-}C_6)$alkyl group, a $(C_1\text{-}C_6)$alkylthio$(C_1\text{-}C_6)$alkyl group, a $(C_1\text{-}C_6)$alkylsulfinyl$(C_1\text{-}C_6)$alkyl group or a

$(C_1-C_6)$alkylsulfonyl$(C_1-C_6)$alkyl group; each of Xs, which may be the same or different, is a halogen atom; n is 1 or 2; each of Ys, which may be the same or different, is a halogen atom, a $(C_1-C_6)$alkyl group, a halo$(C_1-C_6)$alkyl group or a halo$(C_1-C_6)$alkoxy group; and m is 2 or 3) as an active ingredient into a carrier attractive to insect pests; a method for using the same; and a method for controlling insect pests. The present invention relates to, in particular, an agricultural and horticultural poison bait preparation.

The poison bait preparation of the present invention exhibits its excellent effect even at a dosage of about one-twentieth that of conventional pesticidal granules of the phthalamide derivative when it is compared with the granules with respect to an applying dosage per unit area under conditions under which treatment with the granules is not sufficiently effective. The present invention is a technique that permits marked reduction of the dosage of the phthalamide derivative. In addition, the poison bait preparation of the present invention is useful as an agricultural and horticultural poison bait preparation which is clearly superior to conventional agricultural and horticultural poison bait preparations in effect lastingness, exhibits an excellent effect also on various insect pests resistant to the conventional agricultural and horticultural poison bait preparations, and is superior to the conventional preparations also in safety for other animals such as mammals, birds, fishes and the like. Furthermore, the poison bait preparation of the present invention is advantageous in that in general, it remains in crops in a smaller amount as compared with usual application to the crops. Therefore, it meets the demand for the reduction of the amount of agrochemicals.

In the definition of general formula (I) for the phthalamide derivative used in the present invention, the term "halogen atom" means a chlorine atom, a bromine atom, an iodine atom or a fluorine atom. The term "$(C_1-C_6)$alkyl group" means a linear or branched alkyl group of 1 to 6 carbon atoms, such as methyl group, ethyl group, n-propyl group, i-propyl group, n-butyl group, i-butyl group, s-butyl group, t-butyl group, n-pentyl group, n-hexyl group or the like. The term "halo$(C_1-C_6)$alkyl group" means a substituted linear or branched alkyl group of 1 to 6 carbon atoms having as the substituent(s) one or more halogen atoms which may be the same or different, such as trifluoromethyl group, pentafluoroethyl group, 1,2,2,2-tetrafluoro-1-(trifluoromethyl)ethyl group or the like. The term "halo$(C_1-C_6)$alkoxy group" means a substituted linear or branched alkoxy group of 1 to 6 carbon atoms having as the substituent(s) one or more halogen atoms which may be the same or different, such as trifluoromethoxy group, difluoromethoxy group or the like.

Preferable examples of the compound represented by general formula (I) are compounds in which $R^1$ is a $(C_1-C_6)$alkyl group, a $(C_1-C_6)$alkylthio$(C_1-C_6)$alkyl group, a $(C_1-C_6)$alkylsulfinyl$(C_1-C_6)$alkyl group or a $(C_1-C_6)$alkyl-sulfonyl$(C_1-C_6)$alkyl group; each of Xs is a halogen atom; n is 1; each of Ys, which may be the same or different, is a halogen atom, a $(C_1-C_6)$alkyl group, a halo$(C_1-C_6)$alkyl group or a halo$(C_1-C_6)$alkoxy group; and m is 2 or 3. Especially preferable examples thereof are $N^2$-(1,1-dimethyl-2-methyl-thioethyl)-3-iodo-$N^1$-{2-methyl-4-[1,2,2,2-tetrafluoro-1-(trifluoromethyl)ethyl]phenyl}phthalamide, $N^2$-(1,1-dimethyl-2-methylsulfonylethyl)-3-iodo-$N^1$-{2-methyl-4-[1,2,2,2-tetrafluoro-1-(trifluoromethyl)ethyl]phenyl}phthalamide, $N^2$-(1,1-dimethyl-2-methylsulfinylethyl)-3-iodo-$N^1$-{2-methyl-4-[1,2,2,2-tetrafluoro-1-(trifluoromethyl)ethyl]-phenyl}phthalamide, 3-iodo-$N^1$-{2-methyl-4-[1,2,2,2-tetrafluoro-1-(trifluoromethyl)ethyl]phenyl}-$N^2$-(1-methyl-2-methylsulfonylethyl)phthalamide, 3-chloro-$N^1$-{2-methyl-4-[1,2,2,2-tetrafluoro-1-(trifluoromethyl)ethyl]phenyl}-$N^2$-(1-methyl-2-methylsulfonylethyl)phthalamide, 3-bromo-$N^1$-{2-methyl-4-[1,2,2,2-tetrafluoro-1-(trifluoromethyl)ethyl]-phenyl}-$N^2$-(1-methyl-2-methylsulfonylethyl)phthalamide and 3-iodo-$N^1$-{2-methyl-4-[1,2,2,2-tetrafluoro-1-(trifluoromethyl)ethyl]phenyl}-$N^2$-(1-methyl-2-methylsulfinylethyl)phthalamide.

The phthalamide derivative, the compound as active ingredient used in the present invention is the well-known compound disclosed, for example, in JP-A-11-240857 or JP-A-2001-131141 and can be produced according to the description in either of these references. Such a phthalamide derivative is an insecticidal compound of a novel type, is effective also against insect pests resistant to existing chemicals, has low acute toxicity, and has low fish-toxicity. Therefore, it can be said to be a compound having performance characteristics for solving the problems of prior arts.

Typical compounds as the phthalamide derivative are listed below in Table 1 but they are not intended in any way to limit the scope of the present invention. As the phthalamide derivative, the compounds disclosed in JP-A-11-240857 and JP-A-2001-131141 can be exemplified. The phthalamide derivative, the compound as active ingredient used in the present invention contains one or more asymmetric carbon atoms or asymmetric centers in its structural formula in some cases and has two or more optical isomers and diastereomers in some cases. The present invention also includes all of the individual optical isomers and mixtures consisting of these isomers in any ratio. In the table, "n" is a prefix for "normal", "i" is a prefix for "iso", and "t" is a prefix for "tertiary".

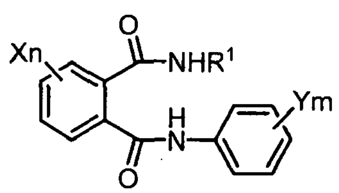

( I )

Table 1

| No. | $R^1$ | Xn | Ym | Physical property: melting point °C |
|---|---|---|---|---|
| 1 | $i\text{-}C_3H_7$ | 3-Cl | $4\text{-}(CF_2)_3CF_3$ | 176-178 |
| 2 | $i\text{-}C_3H_7$ | 3-Cl | $2\text{-}CH_3\text{-}4\text{-}CF_2CF_3$ | 199-200 |
| 3 | $i\text{-}C_3H_7$ | 3-Br | $4\text{-}OCF_3$ | 208-210 |
| 4 | $i\text{-}C_3H_7$ | 3-Br | $2\text{-}CH_3\text{-}4\text{-}CF_2CF_3$ | 201-202 |
| 5 | $i\text{-}C_3H_7$ | 3-Br | $2\text{-}CH_3\text{-}4\text{-}CF(CF_3)_2$ | 222-224 |
| 6 | $i\text{-}C_3H_7$ | 5, $6\text{-}Br_2$ | $2\text{-}CH_3\text{-}4\text{-}OCHF_2$ | 208-210 |
| 7 | $i\text{-}C_3H_7$ | 3-I | $4\text{-}CF_2CF_2CF_3$ | 217-219 |
| 8 | $i\text{-}C_3H_7$ | 3-I | $4\text{-}CF\ (CF_3)_2$ | 209-211 |
| 9 | $i\text{-}C_3H_7$ | 3-I | $2\text{-}Cl\text{-}4\text{-}CF_3$ | 170-171 |
| 10 | $i\text{-}C_3H_7$ | 3-I | $2\text{-}CH_3\text{-}4\text{-}CF_3$ | 202-203 |
| 11 | $i\text{-}C_3H_7$ | 3-I | $2\text{-}CH_3\text{-}4\text{-}CF_2CF_3$ | 195-196 |
| 12 | $i\text{-}C_3H_7$ | 3-I | $2\text{-}CH_3\text{-}4\text{-}CF_2CF_2CF_3$ | 193-195 |
| 13 | $i\text{-}C_3H_7$ | 3-I | $2\text{-}CH_3\text{-}4\text{-}CF\ (CF_3)_2$ | 211-213 |
| 14 | $i\text{-}C_3H_7$ | 3-I | $2\text{-}CH_3\text{-}4\text{-}OCF_3$ | 214-216 |
| 15 | $i\text{-}C_3H_7$ | 3-I | $2\text{-}CH_3\text{-}4\text{-}OCHF_2$ | 207-209 |
| 16 | $i\text{-}C_3H_7$ | 3-I | $2\text{-}CH_3\text{-}4\text{-}OCH_2CF_2CHF_2$ | 229-231 |
| 17 | $i\text{-}C_3H_7$ | 3-I | $2\text{-}CH_3\text{-}4\text{-}OCF_2CHFCF_3$ | 213-214 |
| 18 | $i\text{-}C_3H_7$ | 3-I | $2\text{-}Cl\text{-}4\text{-}OCF_3$ | 173-175 |
| 19 | $i\text{-}C_3H_7$ | 6-I | $2\text{-}Cl\text{-}4\text{-}CF_3$ | 195-196 |
| 20 | $i\text{-}C_3H_7$ | 6-I | $2\text{-}CH_3\text{-}4\text{-}CF\ (CF_3)_2$ | 237-239 |
| 21 | $i\text{-}C_3H_7$ | 3-F | $2\text{-}CH_3\text{-}4\text{-}CF(CF_3)_2$ | 241-243 |
| 22 | $i\text{-}C_3H_7$ | 3-F | $2\text{-}CH_3\text{-}4\text{-}OCF_3$ | 183-184 |
| 23 | $C(CH_3)_2CH_2SCH_3$ | 3-I | $2\text{-}CH_3\text{-}4\text{-}C_3F_7\text{-}i$ | 205-206 |
| 24 | $C(CH_3)_2CH_2SO_2CH_3$ | 3-I | $2\text{-}CH_3\text{-}4\text{-}C_3F_7\text{-}i$ | 90-95 |
| 25 | $C\ (CH_3)_2CH_2SOCH_3$ | 3-I | $2\text{-}CH_3\text{-}4\text{-}C_3F_7\text{-}i$ | 88-90 |
| 26 | $CH(CH_3)CH_2SCH_3$ | 3-I | $2\text{-}CH_3\text{-}4\text{-}C_3F_7\text{-}i$ | 197-199 |
| 27 | $CH\ (CH_3)CH_2SO_2CH_3$ | 3-I | $2\text{-}CH_3\text{-}4\text{-}C_3F_7\text{-}i$ | 82 |
| 28 | $CH(CH_3)CH_2SOCH_3$ | 3-I | $2\text{-}CH_3\text{-}4\text{-}C_3F_7\text{-}i$ | 134 |
| 29 | $C\ (CH_3)_2CH_2SCH_3$ | 3-I | $2\text{-}Cl\text{-}4\text{-}OCF_3$ | 166 |
| 30 | $C\ (CH_3)_2CH_2SO_2CH_3$ | 3-I | $2\text{-}Cl\text{-}4\text{-}OCF_3$ | 141 |
| 31 | $C\ (CH_3)_2CH_2SO_2CH_3$ | 3-Br | $2\text{-}Cl\text{-}4\text{-}OCF_3$ | 133 |
| 32 | $C(CH_3)_2CH_2SC_2H_5$ | 3-I | $2\text{-}CH_3\text{-}4\text{-}C_2F_5$ | 188-189 |
| 33 | $C\ (CH_3)_2CH_2SO_2C_2H_5$ | 3-I | $2\text{-}CH_3\text{-}4\text{-}C_2F_5$ | 120-122 |
| 34 | $C\ (CH_3)_2CH_2SOC_2H_5$ | 3-I | $2\text{-}CH_3\text{-}4\text{-}C_2F_5$ | 125-126 |
| 35 | $C\ (CH_3)_2CH_2SCH_3$ | 3-Cl | $2\text{-}CH_3\text{-}4\text{-}C_3F_7\text{-}i$ | 199-200 |
| 36 | $CH\ (CH_3)CH_2SCH_3$ | 3-I | $2\text{-}Cl\text{-}4\text{-}C_3F_7\text{-}i$ | 190 |
| 37 | $CH\ (CH_3)CH_2SO_2CH_3$ | 3-Cl | $2\text{-}CH_3\text{-}4\text{-}C_3F_7\text{-}i$ | 155-156 |
| 38 | $CH\ (CH_3)CH_2SO_2CH_3$ | 3-Br | $2\text{-}CH_3\text{-}4\text{-}C_3F_7\text{-}i$ | 153-155 |

Although the applying dosage of the active ingredient is varied depending on the kinds of insect pests to be controlled, it is approximately 0.1 to 300 grams/10 are.

The content of the phthalamide derivative as active ingredient in the poison bait preparation of the present invention may be properly determined in view of the insecticidal activity of the insecticidally active ingredient used, insect pests to be controlled and the like. The lower limit of the content should be usually more than 0.01 % by weight, preferably about 0.1 % by weight or more. Although the upper limit of the content is not particularly limited, it varies depending on economical benefit, desired residual effectiveness and formulation physical properties, and the like and is preferably about 10 % by weight, more preferably about 5 % by weight or less.

Although a typical example of the attractive and edible carrier is rice bran, the carrier is not limited to rice bran and as the carrier, the following, for example, can be used singly or in combination: starches; cereal flours such as wheat

flour, corn flour, rice flour, bread flour, potato flour, etc.; food industrial wastes such as bran, sake lees, beer cakes, lees of bean curd, fish cakes, oil cakes, used media for mushrooms after their growing, etc.; animal powders such as powdered chrysalis, powdered krills, powdered beef or pork, etc.; saccharides such as sugar, glucose, honey, molasses, thick malt syrup, etc.; vegetable essential oils such as soybean oil, rapeseed oil, sesame oil, wheat germ oil, etc.; and yeast. Of these, rice bran and sake lees are especially preferable.

The poison bait preparation of the present invention can be produced by kneading the above-exemplified edible carrier with a suitable solvent such as water, molding the kneaded product into a suitable preparation form such as granules, tablets or the like, impregnating the molded product with a solution containing the phthalamide derivative as active ingredient, and then drying the molded product. It is also possible to produce the poison bait preparation by adding the phthalamide derivative previously to the above-exemplified edible carrier and molding the resulting mixture into a suitable preparation form such as granules, tablets or the like by a conventional method.

Further, if necessary, antioxidants, preservatives, and agents for prevention of eating by mistake, as well as flavoring materials for enhancing the attractiveness to insect pests may be added. The antioxidants include, for example, erythorbic acid, sodium erythorbate, dibutylhydroxytoluene, dl-α-tocopherol, nordihydroguaiaretic acid, methylhydroxyanisole, propyl gallate, guaiac resin and L-cystine hydrochloride. The preservatives include, for example, benzoic acid, sodium benzoate, salicylic acid, diphenyl, sorbic acid, potassium sorbate, dehydroacetic acid, sodium dehydroacetate, ethyl p-oxybenzoate, butyl p-oxybenzoate, propyl p-oxybenzoate, calcium propionate, sodium propionate, 5-chloro-2-methyl-4-isothiazolin-3-one, 1,2-benzoisothiazolin-3-one and 2-n-octyl-4-isothiazolin-3-one. The agents for prevention of eating by mistake include, for example, red pepper powder, amaranth, amaranth aluminum lake, erythrosine, erythrosine aluminum lake, New Coccine, phloxine, Rose Bengal, Acid Red, tartrazine, tartrazine aluminum lake, Sunset Yellow FCF aluminum lake, Fast Green FCF, Fast Green FCF aluminum lake, Brilliant Blue FCF, Brilliant Blue FCF aluminum lake, Indigo Carmine, Indigo Carmine aluminum lake, β-carotene and copper chlorophyll. The flavoring materials include, for example, a cheese flavoring material, a butter flavoring material, a peanut flavoring material, a peach flavoring material, a strawberry flavoring material and a milk flavoring material.

The poison bait preparation of the present invention may be used after being incorporated with active ingredients other than the phthalamide derivative, such as organophosphorus insecticidal compounds, carbamate insecticidal compounds, pyrethroid insecticidal compounds, neonicotinoide insecticidal compounds, juvenile-hormone-like compounds, compounds inhibiting insect chitinous substance formation, natural substances having insecticidal activity, and the like. Synergists (active enhancers) such as metabolic inhibitors may also be added.

Specific examples of the organophosphorus insecticidal compounds are Chlorpyrifos, Chlorpyrifosmethyl, Diazinon, Fenitrothion, Fenthion, Malathion, Pyrimiphosmethyl, Prothiofos, Pyridaphenthion, Isoxathion and Trichlorphon. Specific examples of the carbamate insecticidal compounds are BPMC, Ethiophencarb, MPMC, Propoxur, NAC (Carbaryl) and XMC. Specific examples of pyrethroid insecticidal compounds are Cypermethrin, Deltamethrin, Fenpropathrin, Fenvalerate, Permethrin, Cyfluthrin, Tralomethrin, Flucythrinate, Biphenothrin, Cyhalothrin, Cycloprothrin, Fluvalinate, Ethofenprox, Silafluofen and Tefluthrin. Specific examples of the neonicotinoide insecticidal compounds are Imidacloprid, Nitenpyram, Acetamiprid, Thiamethoxam, Clothianidin, Thiacloprid and Dinotefuran. Specific examples of the juvenile-hormone-like compounds are Methoprene, Pyriproxyfen and Phenoxycarb. Specific examples of the compounds inhibiting insect chitinous substance formation are Diflubenzuron, Teflubenzuron, Chlorfluazuron, Flufenoxuron, Hexaflumuron, Novaluron, Cyromazin and Buprofezin. Specific examples of insecticidal compounds of other types are Fipronil, Chlorfenapyl, Emamectin-benzoate, Abamectin, Tebufenozide, Methoxyfenozide, Chromafenozide, Spinosad, Indoxacarb, Pyridalyl, Metaflumizone, SI-0009 (development cord), DKI-0001 (development cord), Hydramethylnon and Metaldehyde. The active ingredients other than the phthalamide derivative are not limited to the above-exemplified compounds.

The poison bait preparation of the present invention can be further incorporated with parasitic fungi on insects as active ingredients other than the phthalamide derivative. The parasitic fungi include, for example, Metarhizium anisopliae of the genus Metarhizium and Beauveria bassiana of the genus Beauveria.

The poison bait preparation of the present invention exhibits an excellent controlling effect on various insect pests such as agrohorticultural insect pests, forest and lumber insect pests, animal husbandry insect pests, sanitary insect pests and the like and acts effectively, for example, on the following typical insect pests. It can be used also for controlling other insect pests and can be used for controlling all insect pests that are active on soil surface or near soil surface layer. As the insect pests, the following insect pests can be exemplified.

LEPIDOPTERA including, for example, turnip cutworm (Agrotis segetum), black cutworm (Agrotis ipsilon), cutworm (Agrotis tokionis), garden cutworm (Agrotis exexclamationis), Spotted cutworm (Xestia c-nigrum), Diarsia canescens, Hermonassa cecilia, common cutworm (Spodoptera litura), cabbage armyworm (Mamestra brassicae), beet armyworm (Spodoptera exigua), tobacco budworm (Helicoverpa armigera), Heliothis spp., Cabbage looper (Autographa nigrisigna), Trichoplusia ni, common white (Pieris rapae), bluegrass webworm (Parapediasia teterrella), and lawn grass cutworm (Spodoptera depravata); COLEOPTERA including, for example, Scarabaeidae such as Anomala spp., Maladera spp., Blitopertha orientalis, Heptophylla picea, Phyllopertha diversa, Japanese beetle (Popilla japonica), Agriotes

ogurae, barley wireworm (Melanotus okinawenisis), etc.; Chrysomeridae such as Diabrotica spp., hunting billbug (Sphenophorus venatus), etc.; and Curculionidae such as Scepticus spp., etc.; DIPTERA including, for example, burdock root miner (Ophiomyia lappivora), Bradisia agrestis, onion maggot (Delia antiqua), turnip maggot (Delia floralis), seed corn maggot (Hylemya platura) and Dicranoptycha spp.; GASTROPODA including slugs, snails and the like; and CRUSTACEA including pillbug and the like.

The poison bait preparation of the present invention has an excellent controlling effect particularly on cutworms, a general term for larvae of insect pests belonging to LEPIDOPTERA. In particular, old staged larvae of cutworms are generally difficult to control by the use of chemicals, therefore, the poison bait preparation of the present invention characteristically exhibits its excellent effect on the old staged larvae. Furthermore, the poison bait preparation of the present invention has an excellent effect also on insect pest resistant to chemicals such as organophosphorus insecticides, carbamate insecticides and pyrethroid insecticides and has a marked effect on chemical-resistant cutworms.

The poison bait preparation of the present invention is effective also against forest and lumber insect pests, animal husbandry insect pests and sanitary insect pests, such as Tabanidae including Tabanus rufidens, etc.; Muscidae including housefly (Musca domestica), etc.; Gasterophilidae including horse botfly (Gasterophilus intestinalis), etc.; Hypodermatidae including warble fly (Hypoderma bovis), etc.; Phoridae including Megaselia spiracularis, etc.; Culicidae including Anopheles sinensis, Aedes albopictus, etc.; Pulicidae including cat flea (Ctenocephalides felis), dog flea (Ctenocephalides canis), etc., Ixodidae including Ixodes ovatus, etc.; Lymantriidae including Sphrageidus similes, etc.; Curculionidae including maize weevil (Sitophilus zeamais), etc.; Vespidae including yellow hornet (Vespa simillima), etc.; Pulex including human flea (Pulex Irritans), etc.; Blattellidae including German cockroach (Blattella germanica), etc.; Blattidae including American cockroach (Periplaneta Americana), Japanese cockroach (Periplaneta japonica), etc.; Phthirus including crab louse (Pthirus pubis), etc.; Rhinotermitidae including Reticulitermes speratus, formosan subterranean termite (Coptotermes formosanus Shiraki), etc.; Ixodidae including Schulze tick (Ixodes persulcatus), etc.; and Macronyssidae including house tick (Ornithonyssus bacoti), etc.

EXAMPLES

The present invention is concretely illustrated with reference to the following examples, which should not be construed as limiting the scope of the invention.

Production Example 1

A carrier was obtained by mixing 75 % by weight of rice bran and 25 % by weight of distilled water, and granulating the resulting mixture with a piston granulator (granule size: 2.5 mm), followed by drying (50°C, 6 hours) and granule size regulation (granule length: 3 to 8 mm) steps. The carrier was impregnated with 0.1 % by weight of compound No. 25 (2,000 ppm aqueous dilution of compound No. 25 (containing 0.05% of 5-chloro-2-methyl-4-isothiazolin-3-one (trade name: Kathone) as an antiseptic) was infiltrated into the carrier in a volume of 0.5 ml per g of the carrier). Then, the impregnated carrier was subjected to a drying (50°C, 6 hours) step again to obtain the poison bait preparation of the present invention. Using the poison bait preparation obtained in the production example, the tests described below were carried out.

Formulation Reference Example (Preparation of a conventional preparation form)

| | | |
|---|---|---|
| Compound No. 25 | 1 | part |
| Mixed powder of bentonite and clay | 94 | parts |
| Calcium ligninsulfonate | 5 | parts |

Granules were prepared by mixing the above ingredients uniformly, and kneading the resulting mixture together with a suitable amount of water, followed by granulation and drying. The granules obtained were used in the following test.

Test Example 1: Superiority of the poison bait preparation over the conventional preparation form (granules) in the case of compound No. 25

An upland field in a plastic greenhouse was partitioned into plots each having an area of 1 $m^2$ (1 x 1 m) and each plot was enclosed with plastic boards of 30 cm in height. Twenty-five cabbage seedlings were transplanted in each plot and the poison bait preparation produced in Production Example 1 was uniformly applied to the surface of soil in an amount of 3 or 6 kg/10 a. After this granule application, 20 sixth-instar larvae of black cutworm (Agrotis ipsilon) were released onto the crop plants. Fourteen days after the release, the miss-planted rate of the cabbage seedlings was investigated and the control rate was calculated according to the following numerical expression. The test was carried

out with duplicate groups. The result is shown in Table 2 below.

For comparison, the conventional preparation form (conventional pesticidal granules) obtained by the use of an inedible carrier in the formulation reference example and a NAC poison bait preparation (a carbamate insecticide) were tested in the same manner as above.

$$\text{Control rate} = 100 - (\text{miss-planted rate in treated plot} / \text{miss-planted rate in untreated plot}) \times 100$$

Table 2

| Test chemical | Content of active ingredient | Applying dosage g a.i./ 10a | Miss-planted rate (%) | Control rate |
|---|---|---|---|---|
| Poison bait preparation of the invention | 0.1% | 6 | 0 | 100 |
| | 0.1% | 3 | 0 | 100 |
| Conventional preparation form (granules) | 1% | 60 | 56 | 44 |
| NAC poison bait preparation | 5% | 300 | 0 | 100 |
| Untreated plot | | - | 100 | 0 |

Test Example 2: Comparison with an organophosphorus insecticide, a carbamate insecticide and a pyrethroid insecticide with respect to effect lastingness

An upland field in a plastic greenhouse was partitioned into plots each having an area of 1 $m^2$ (1 x 1 m) and each plot was enclosed with plastic boards of 30 cm in height. Twenty-five cabbage seedlings were transplanted in each plot and the poison bait preparation produced in Production Example 1 was uniformly applied to the surface of soil in an amount of 3 kg/10 a. Immediately and 14 days after this granule application, 30 sixth-instar larvae of turnip cutworm (Agrotis segetum) were released. Fourteen days after the release, the miss-planted rate of the cabbage seedlings was investigated and the control rate was calculated in the same manner as in Test Example 1. The test was carried out with duplicate groups.

For comparison, a Trichlorfon poison bait preparation (an organophosphorus insecticide), a NAC poison bait preparation (a carbamate insecticide) and a Permethrin poison bait preparation (a pyrethroid insecticide) were tested in the same manner as above.

The result is shown in Table 3 below.

Table 3

| Test chemical | Content of active ingredient | Applying dosage g a.i./ 10a | Miss-planted rate (%) | | Control rate | |
|---|---|---|---|---|---|---|
| | | | Release just after treatment | Release 14 days after treatment | Release just after treatment | Release 14 days after treatment |
| Poison bait preparation of the invention | 0.1% | 3 | 0 | 8 | 100 | 92 |
| Trichlorfon poison bait preparation | 1% | 30 | 4 | 100 | 96 | 0 |

(continued)

| Test chemical | Content of active ingredient | Applying dosage g a.i./10a | Miss-planted rate (%) | | Control rate | |
|---|---|---|---|---|---|---|
| | | | Release just after treatment | Release 14 days after treatment | Release just after treatment | Release 14 days after treatment |
| NAC poison bait preparation | 5% | 150 | 4 | 100 | 96 | 0 |
| Permethrin poison bait preparation | 0.1% | 3 | 8 | 64 | 92 | 36 |
| Untreated plot | | - | 100 | 100 | 0 | 0 |

Test Example 3: Effect on turnip cutworm (Agrotis segetum) in a large-scale test

An upland field in a plastic greenhouse was partitioned into plots each having an area of 15 $m^2$ (6 x 2.5 m) and each plot was enclosed with plastic boards of 30 cm in height. Sixty-three cabbage seedlings were transplanted in each plot and the poison bait preparation produced in Production Example 1 was uniformly applied to the surface of soil in an amount of 4 kg/10 a (the applying dosage of a NAC poison bait preparation as a reference preparation: 6 kg/10a), after which 35 fifth- to sixth-instar larvae of turnip cutworm were released. Seven, fourteen and twenty days after the release, the miss-planted rate of the cabbage seedlings was investigated and the control rate was calculated in the same manner as in Test Example 1. The test was carried out with duplicate groups. The result is shown in Table 4 below.

Table 4

| Test chemical | Content of active ingre-dient | Applying dosage g a.i./10a | Miss-planted rate (%) | | | Control rate | | |
|---|---|---|---|---|---|---|---|---|
| | | | After 7 days | After 14 days | After 20 days | After 7 days | After 14 days | After 20 days |
| Poison bait preparation of the invention | 0.1% | 4 | 0 | 0 | 0 | 100 | 100 | 100 |
| NAC poison bait preparation | 5% | 300 | 2 | 6 | 8 | 94 | 88 | 86 |
| Untreated plot | | - | 32 | 51 | 56 | 0 | 0 | 0 |

Test Example 4: Effect on common cutworm (Spodoptera litura) strain resistant to organophosphorus insecticides, carbamate insecticides and pyrethroid insecticides

An upland field in a plastic greenhouse was partitioned into plots each having an area of 1 $m^2$ (1 x 1 m) and each plot was enclosed with plastic boards of 30 cm in height. Twenty-five cabbage seedlings were transplanted in each plot and the poison bait preparation produced in Production Example 1 was uniformly applied to the surface of soil in an amount of 3 kg/10 a, after which 80 fifth- to sixth-instar larvae of common cutworm were released. Fourteen days after the release, the miss-planted rate of the cabbage seedlings was investigated and the control rate was calculated in the same manner as in Test Example 1. The test was carried out with duplicate groups.
Other poison bait preparations were also tested in the same manner as above. The result is shown in Table 5 below.

Table 5

| Test chemical | Content of active ingredient | Applying dosage g a.i./ 10a | Miss- planted rate (%) | control rate |
|---|---|---|---|---|
| Poison bait preparation of the invention | 0.1% | 3 | 0 | 100 |
| Trichlorfon poison bait preparation | 1% | 30 | 100 | 0 |
| NAC poison bait preparation | 5% | 150 | 100 | 0 |
| Permethrin poison bait preparation | 0.1% | 3 | 100 | 0 |
| Untreated plot | | - | 100 | 0 |

Test Example 5: Effect on tobacco budworm (Heliothis sp.) strain resistant to organophosphorus insecticides, carbamate insecticides and pyrethroid insecticides

An upland field in a plastic greenhouse was partitioned into plots each having an area of 1 $m^2$ (1 x 1 m) and each plot was enclosed with plastic boards of 30 cm in height. Twenty-five cabbage seedlings were transplanted in each plot and the poison bait preparation produced in Production Example 1 was uniformly applied to the surface of soil in an amount of 4 kg/10 a, after which 20 fifth-instar larvae of tobacco budworm were released. Five days after the release, the living larvae in each plot were counted and the control rate was calculated according to the following numerical expression. The test was carried out with duplicate groups.

Other poison bait preparations were also tested in the same manner as above. The result is shown in Table 6 below.

$$\text{Control rate} = 100 - (\text{number of living larvae in treated plot} / \text{number of living larvae in untreated plot}) \times 100$$

Table 6

| Test chemical | Content of active ingredient | Applying dosage g a.i./ 10a | Number of living larvae | Control rate |
|---|---|---|---|---|
| Poison bait preparation of the invention | 0.1% | 4 | 0 | 100 |
| Trichlorfon poison bait preparation | 1% | 40 | 10 | 0 |
| NAC poison bait preparation | 5% | 200 | 3 | 70 |
| Permethrin poison bait preparation | 0.1% | 4 | 10 | 0 |
| Untreated plot | | - | 10 | 0 |

As shown in Table 2, the poison bait preparation of the present invention exhibits its excellent effect even at a dosage of about one-twentieth that of the conventional pesticidal granules, under the conditions in which no sufficient

effect can be obtained by applying the phthalamide derivative used as an active ingredient in the present invention, in the form of conventional pesticidal granules obtained by the use of an inedible carrier. Therefore, the poison bait preparation of the present invention permits marked reduction of the dosage of the phthalamide derivative. Furthermore, it is clearly superior in effect lastingness to conventional agrohorticultural poison bait preparations as shown in Table 3 and Table 4, exhibits an excellent effect also on various insect pests resistant to the conventional agrohorticultural poison bait preparations as shown in Table 5 and Table 6, and is superior also in safety to the conventional preparations. Thus, the poison bait preparation of the present invention is very useful as an agrohorticultural poison bait preparation.

## Claims

1. A poison bait preparation obtained by incorporating a phthalamide derivative represented by general formula (I):

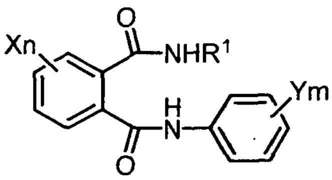

( I )

(wherein $R^1$ is a ($C_1$-$C_6$)alkyl group, a ($C_1$-$C_6$)alkylthio($C_1$- $C_6$)alkyl group, a ($C_1$-$C_6$)alkylsulfinyl($C_1$-$C_6$)alkyl group or a ($C_1$-$C_6$)alkylsulfonyl($C_1$-$C_6$)alkyl group; each of Xs, which may be the same or different, is a halogen atom; n is 1 or 2; each of Ys, which may be the same or different, is a halogen atom, a ($C_1$-$C_6$)alkyl group, a halo($C_1$-$C_6$) alkyl group or a halo($C_1$-$C_6$)alkoxy group; and m is 2 or 3) as an active ingredient into an edible carrier attractive to insect pests.

2. A poison bait preparation according to claim 1, wherein the content of the phthalamide derivative is 0.01 to 5 % by weight.

3. A poison bait preparation according to claim 1 or 2, comprising rice bran and/or sake lees as the edible carrier.

4. A poison bait preparation according to any one of claims 1 to 3, wherein the insect pests to be controlled are insect pests in the fields of agriculture and horticulture.

5. A method for applying a poison bait preparation, comprising treating soil around crops with an effective amount of a poison bait preparation according to any one of claims 1 to 4.

6. A method for controlling insect pests in the fields of agriculture and horticulture, comprising treating soil around crops with an effective amount of a poison bait preparation according to any one of claims 1 to 4.

7. A method for controlling insect pests in the fields of agriculture and horticulture according to claim 6, wherein the insect pests in the fields of agriculture and horticulture are cutworms.

8. A method for controlling insect pests in the fields of agriculture and horticulture according to claim 6 or 7, wherein the insect pests in the fields of agriculture and horticulture are chemical-resistant cutworms.

9. A method for controlling insect pests in the fields of agriculture and horticulture according to any one of claims 6 to 8, wherein the insect pests in the fields of agriculture and horticulture are cutworms resistant to one or more chemicals selected from organophosphorus insecticides, carbamate insecticides and pyrethroid insecticides.

10. Use of a phthalamide derivative represented by general formula (I):

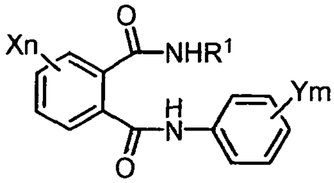

( I )

(wherein $R^1$ is a $(C_1-C_6)$alkyl group, a $(C_{1-}C_6)$alkylthio$(C_1-C_6)$alkyl group, a $(C_{1-}C_6)$alkylsulfinyl$(C_1-C_6)$alkyl group or a $(C_{1-}C_6)$alkylsulfonyl$(C_1-C_6)$alkyl group; each of Xs, which may be the same or different, is a halogen atom; n is 1 or 2; each of Ys, which may be the same or different, is a halogen atom, a $(C_1-C_6)$alkyl group, a halo$(C_{1-}C_6)$alkyl group or a halo$(C_1-C_6)$alkoxy group; and m is 2 or 3) for the production of a poison bait preparation according to any one of claims 1 to 4.